# EUROPÄISCHE PATENTSCHRIFT

(11) **EP 4 069 625 B1**
(45) Veröffentlichungstag und Bekanntmachung des Hinweises auf die Patenterteilung: **07.06.2023**
(21) Anmeldenummer: 20819654.3
(22) Anmeldetag: 30.11.2020
(51) Int. Cl.: B66C 5/00, B66C 23/20, G21D 1/00

(54) **VERFAHREN MIT LASTAUFNEHMENDER VORRICHTUNG**
METHOD WITH LOAD-SUPPORTING DEVICE
PROCÉDÉ AVEC DISPOSITIF PORTEUR

(30) Priorität: 05.12.2019 DE 102019133183
(43) Veröffentlichungstag der Anmeldung: 12.10.2022
(73) Patentinhaber: RWE Nuclear GmbH, 45141 Essen (DE)
(72) Erfinder: LANDGRAF, Thorsten, 45141 Essen (DE); KLEPPINGER, Dennis, 45141 Essen (DE)
(74) Vertreter: Keenway Patentanwälte Neumann Heine Taruttis
(86) Internationale Anmeldenummer: PCT/EP2020/083925
(87) Internationale Veröffentlichungsnummer: WO 2021/110592

(56) Entgegenhaltungen:
- CA-A1- 2 234 082
- CN-A- 108 561 626
- DE-B3-102009 019 168
- DE-U1- 9 318 480
- DE-U1- 20 102 388
- DE-U1- 29 802 606
- DE-U1- 29 920 718

## Beschreibung

Gegenstand der vorliegenden Erfindung ist ein Verfahren zum Aufnehmen der Last eines von einer Leitung abzutrennenden Leitungsstücks, bei dem die Montagegelast in das verbleibende Stück der Leitung eingebracht wird.

Beim Rückbau von Industrieanlagen müssen auch Leitungen rückgebaut werden. Unter dem Begriff Leitung wird im Rahmen dieses Dokumentes insbesondere eine Leitung zum Führen eines Fluids, insbesondere einer Flüssigkeit und/oder eines Gases, insbesondere von Prozessmedien und/oder Wasserdampf verstanden. Weiterhin werden unter dem Begriff Leitungen im Rahmen dieses Dokumentes gehalterte Rohrleitungen, die also an einer Wand, einer Decke oder einem Boden fixiert sind. Je nach Ausgestaltung der Industrieanlage können die Platzverhältnisse beim Rückbau begrenzt sein, gleichzeitig sind oft Arbeitsschutzschutzvorschriften zu beachten, die einen Abriss größerer Einheiten ohne vorherige Zerlegung unmöglich machen. So sind insbesondere beim Rückbau von kerntechnischen Anlagen in Deutschland die Regelungen des Atomgesetzes und der Strahlenschutzverordnung zu beachten, in anderen Ländern die Regelungen ähnlicher Gesetze und/oder Verordnungen. In solchen Anlagen können beispielsweise nicht ohne weiteres Lastanschlagspunkte montiert werden. Auch sind entsprechende Sondergerüste aufwändig zu erstellen.

Aus der CN 108561626 ist eine Vorrichtung und ein Verfahren zum Bau einer Pipeline bekannt, bei der eine Vorrichtung die Last eines Leitungsstückes aufnehmen kann und über Schienen mit der Pipeline verbunden ist.

Hiervon ausgehend liegt der vorliegenden Erfindung die Aufgabe zugrunde, die aus dem Stand der Technik bekannten Nachteile zumindest teilweise zu überwinden.

Diese Aufgabe wird gelöst mit den Merkmalen des Anspruchs 1. Vorteilhafte Weiterbildungen sind Gegenstand der abhängigen Ansprüche.

Es wird zunächst eine Vorrichtung zum Aufnehmen der Last eines von einer Leitung abzutrennenden Leitungsstücks beschrieben, die nicht gesondert sondern im Rahmen der Verfahrensansprüche beansprucht wird. Diese Vorrichtung umfasst mindestens ein Halteelement zum kraftübertragenden Befestigen an der Leitung; einen kraftübertragend an dem mindestens einen Halteelement befestigten Tragarm, der ein Zugmittel aufweist, welches zum Aufnehmen der Last des abzutrennenden Leitungsstücks mit diesem verbindbar ist.

Unter einer Last wird hier die Gewichtskraft verstanden, die auf das abzutrennende Leitungsstück nach der Abtrennung von der Leitung wirkt. Diese Gewichtskraft wird über das Zugmittel in den Tragarm eingeleitet und bewirkt am Halteelement eine Kraft, die in die Leitung eingeleitet werden muss und andererseits ein Moment durch die am Tragarm angreifende Kraft, die sich aus der Last des abzutrennenden Leitungsstücks und der Gewichtskraft basierend auf dem Eigengewicht des Tragarms ergibt. Unter einer kraftübertragenden Befestigung wird eine Befestigung verstanden, die eine Einleitung von Kraft und Moment in das entsprechende Element erlaubt, also einerseits vom Tragarm in das Halteelement und andererseits vom Halteelement in die Leitung.

Die Erfindung nutzt also die rückzubauende Leitung zur Aufnahme der Gewichtskraft und der Momente basierend auf der Abtrennung eines abzutrennenden Leitungselementes. Dies beruht darauf, dass die Leitungen und deren Halterungen auf die mit Fluid gefüllte Leitung ausgelegt sind. Beim Rückbau sind diese Leitungen jedoch entleert, so dass eine Lastreserve besteht, die durch die Erfindung genutzt wird. Durch die Erfindung kann so eine einfache Abstützung des abzutrennenden Leitungsstückes erfolgen, ohne, dass ein Sondergerüst erforderlich ist, oder dass weitere Befestigungspunkte gesetzt werden müssen, beispielsweise durch entsprechende Dübel. Letzteres ist insbesondere in kerntechnischen Anlagen nachteilhaft. Zudem erlaubt die Erfindung auch den Rückbau von Leitungen unter beengten Platzverhältnissen auch dort. wo ein Sondergerüst schwer möglich ist.

Unter dem Zugmittel wird insbesondere ein Seil oder eine Kette verstanden. Das Seil ist bevorzugt als Stahlseil ausgebildet. Bevorzugt wird die Masse des abzutrennenden Leitungsstücks so vorgegeben, dass die Last, die durch diese Masse und durch die Masse von Tragarm, Halteelement, Zugmittel und gegebenenfalls Zubehör wie Spanngurten, Haken, Blöcken, Rollen oder ähnlichem, und das entstehende Moment, welches von den Abmessungen insbesondere des Tragarms abhängt, in die Leitung eingeleitet werden können, ohne, dass diese beschädigt wird oder sich die Vorrichtung von der Leitung löst oder ihre Position ändert. So ist insbesondere auch ein sicheres Absetzen des abzutrennenden Leitungsstücks gewährleistet, ohne, dass es durch ein Ver- oder Abrutschen der Vorrichtung oder eine Bewegung der Leitung zu einer Gefährdung kommen kann.

Das Halteelement ist in seinen Dimensionen bevorzugt an die Dimensionen der Leitung, insbesondere einen Durchmesser der Leitung, angepasst, um eine sichere Kraft- und Momenteneinleitung in die Leitung zu gewährleisten.

Bevorzugt verfügt das mindestens eine Halteelement über zwei Flansche, über die das Halteelement auf die Leitung aufgelegt werden kann. Bevorzugt erstrecken sich die Flansche in der Längsrichtung der Leitung.

Durch die Ausbildung zweier Flansche kann eine verbesserte Krafteinleitung in die Leitung erreicht werden. Gleichzeitig wird der Aufbau des Halteelements auf der Leitung erleichtert.

Bevorzugt umfasst die Vorrichtung weiterhin mindestens einen Spanngurt zum kraftschlüssigen Fixieren des Halteelements auf der Leitung.

Durch mindestens einen Spanngurt kann eine kraftübertragende Verbindung zwischen Halteelement und Leitung einfach hergestellt werden. Die Verbindung über mindestens einen Spanngurt pro Halteelement ist flexibel und erlaubt eine einfache Verschiebung der Vorrichtung, wenn der Rückbau der Leitung voranschreitet. Der Spanngurt ist aus einem textilen Material ausgebildet, insbesondere gewebt. Der Spanngurt weist ein Spannelement auf, mit dem der Spanngurt gespannt werden kann, so dass er eine Druckkraft auf die Leitung und das Halteelement ausübt, so dass das Halteelement gegen die Leitung gepresst und somit kraftschlüssig mit dieser verbunden wird.

Bevorzugt ist der Tragarm aus Aluminium oder einer Aluminiumlegierung ausgebildet. Unter einer Aluminiumlegierung wird eine Legierung verstanden, die überwiegend aus Aluminium besteht und die weitere Legierungselemente wie beispielsweise Mangan, Magnesium, Kupfer, Silicium und/oder Zink enthält. Unter Aluminium wird ein Metall mit einem Aluminiumgehalt von mindestens 99 Gewichts-% verstanden. Die Ausbildung des Tragarms und/oder des Halteelements aus Aluminium erlaubt einen leichten Aufbau der Vorrichtung, so dass bei vorgegebener maximaler Last der Leitung die Nutzlast, die mit der Vorrichtung gehoben beziehungsweise gehalten werden kann, erhöht wird.

Bevorzugt ist eine Ausgestaltung, bei der der Tragarm ein Fachwerk umfasst. Der Aufbau des Tragarms aus Fachwerk erlaubt den Aufbau eines Tragarms mit relativ geringem Eigengewicht, so dass die Nutzlast, die mit der Vorrichtung gehoben und/oder gehalten werden kann, erhöht wird.

Bevorzugt umfasst die Vorrichtung eine Winde zum Auf- und Abwickeln des Zugmittels. Diese Winde kann manuell oder über einen Motor angetrieben werden. Als Motor wird bevorzugt ein Elektromotor eingesetzt. Durch die Winde kann das Zugmittel auf- und abgewickelt werden, so dass das Zugmittel beispielsweise vor dem Abtrennen des abzutrennenden Leitungsstück gestrafft werden kann, um das abzutrennende Leitungsstück zu stabilisieren. Gleichfalls kann durch ein Abwickeln des Zugmittels das abzutrennende Leitungsstück abgesetzt oder durch ein Aufwickeln des Zugmittels angehoben werden.

Es wird ein erfindungsgemäßes Verfahren zum Aufnehmen der Last eines von einer Leitung abzutrennenden Leitungsstücks vorgeschlagen, bei dem mindestens ein Halteelement einer Vorrichtung wie oben beschrieben kraftübertragend an der Leitung befestigt wird und das Zugmittel mit dem abzutrennenden Leitungsstück verbunden wird.

Durch die Verbindung des Zugmittels mit dem abzutrennenden Leitungsstück und dessen Straffung kann das abzutrennende Leitungsstück stabilisiert werden, so dass ein Abtrennen des abzutrennenden Leitungsstücks ohne Gefährdung von Personen oder Sachen erfolgen kann.

Bevorzugt wird das mindestens eine Halteelement über mindestens einen Spanngurt kraftschlüssig mit der Leitung verbunden.

Bevorzugt wird das Zugmittel über eine Winde auf- und abgewickelt. Diese Winde kann manuell oder über einen Motor angetrieben werden. Als Motor wird bevorzugt ein Elektromotor eingesetzt. Durch die Winde kann das Zugmittel auf- und abgewickelt werden, so dass das Zugmittel beispielsweise vor dem Abtrennen des abzutrennenden Leitungsstück gestrafft werden kann, um das abzutrennende Leitungsstück zu stabilisieren. Gleichfalls kann durch ein Abwickeln des Zugmittels das abzutrennende Leitungsstück abgesetzt oder durch ein Aufwickeln des Zugmittels angehoben werden.

Die Vorteile und bevorzugten Ausgestaltungsmerkmale der zuvor beschriebenen Vorrichtung sind auf das Verfahren anwendbar und übertragbar, und umgekehrt. Die Vorrichtung ist vorzugsweise zur Durchführung des Verfahrens bestimmt und eingerichtet.

Weiterhin wird ein Verfahren zum Rückbau eines Kraftwerkes, insbesondere eines Kernkraftwerks oder einer kerntechnischen Anlage vorgeschlagen, bei dem ein erfindungsgemäßes Verfahren beim Rückbau mindestens einer Leitung eingesetzt wird.

Insbesondere beim Rückbau von kerntechnischen Anlagen wie Kernkraftwerken sind in vielen Ländern die gesetzlichen Bestimmungen streng, so dass andere Vorrichtungen und Verfahren zum Aufnehmen von Lasten beim Rückbau von Leitungen hohen Anforderungen genügen müssen oder hohe Folgekosten nach sich ziehen. Zudem ist der Schutz vor Unfällen von noch größerer Bedeutung, um die Gefährdung von Menschen durch eine radiologische Kontamination zu verhindern. In diesen Umgebungen, die oft auch beengte Platzverhältnisse ist das erfindungsgemäße Verfahren und die beschriebene Vorrichtung besonders bevorzugt einsetzbar.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1 bis 6:: ein erstes Beispiel einer Vorrichtung zum Aufnehmen der Last eines von einer Leitung abzutrennenden Leitungsstücks in verschiedenen Ansichten; und
- Fig. 7: ein zweites Beispiel einer solchen Vorrichtung.

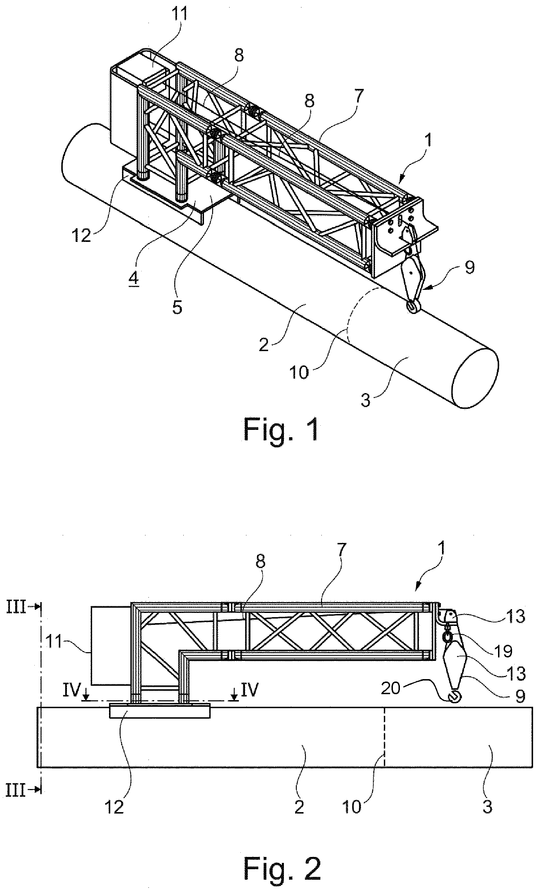

Fig. 1 zeigt eine perspektivische Ansicht einer Vorrichtung 1 zum Aufnehmen der Last eines von einer Leitung 2 abzutrennenden Leitungsstücks 3, Fig. 2 eine entsprechende Seitenansicht. Beide Figuren werden im Folgenden gemeinsam beschrieben.

Die Vorrichtung 1 wird insbesondere in Situationen eingesetzt, in der die räumlichen Verhältnisse beengt sind und in denen insbesondere ein Kran oder ähnliches nicht eingesetzt werden kann. Dies ist beispielsweise im Kraftwerksbereich der Fall, also beispielsweise beim Rückbau von Kraftwerken oder auch insbesondere von kerntechnischen Anlagen wie einem Kernkraftwerk. Die Leitung 2 ist eine Leitung zum Führen eines Fluids, insbesondere eines Gases und/oder einer Flüssigkeit, insbesondere zum Führen von Wasser und/oder Wasserdampf. Bei der Auslegung von Kraftwerken und/oder kerntechnischen Anlagen werden diese Leitungen 2 und ihre Befestigungen, beispielsweise an einer Wand, einer Decke oder einem Boden, so ausgelegt, dass die Leitungen 2 mit dem zu führenden Fluid die entsprechenden Sicherheitsanforderungen erfüllen. Beim Rückbau sind die Leitungen 2 entleert, so dass eine großzügige Reserve in Bezug auf die durch die Leitung 2 und deren Halterungen aufzunehmenden Lasten besteht. Diese wird durch die vorliegende Erfindung genutzt.

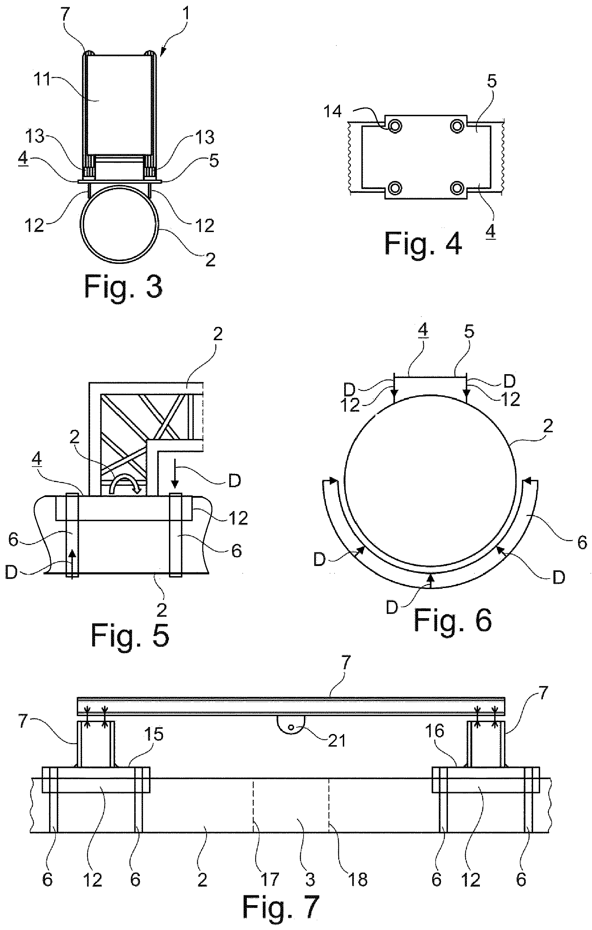

Die Vorrichtung 1 umfasst in diesem Beispiel ein Halteelement 4, welches kraftübertragend an der Leitung 2 befestigt ist. Hierbei ist das Halteelement 4 nicht an dem abzutrennenden Leitungsstück 3 befestigt, sondern an dem Teil der Leitung 2, der zunächst bestehen bleibt. Kraftübertragend bedeutet, dass Kräfte, die auf das Halteelement 4 wirken, in die Leitung 2 eingeleitet werden können, um so die auf das Halteelement 4 wirkenden Kräfte und Momente in die Leitung 2 einzuleiten. Hierzu weist das Halteelement 4 eine Plattform 5 auf, die mit zwei Spanngurten 6 an der Leitung 2 befestigt sind, wie dies insbesondere Fig. 5 und 6 zeigen. Das Halteelemente 4 weist ferner zwei Flansche 12 auf, die auf der Leitung 2 aufliegen. Die Spanngurte 6 sind kraftschlüssig auf der Leitung 2 befestigt. Mit der Plattform 5 des Halteelementes 4 ist ein Tragarm 7 kraftübertragend verbunden. Die am Tragarm 7 anliegenden Kräfte und Momente werden somit in das Halteelement 4 und über die Spanngurte 5 in die Leitung 2 eingeleitet.

Der Tragarm 7 weist ferner ein Zugmittel 8 auf, hier ein Seil. Das Zugmittel 8 weist ein Übersetzungsmittel 9 auf, an dem über einen nicht gezeigten Spanngurt das abzutrennende Leitungselement 3 fixierbar ist. Wird dann das abzutrennende Leitungselement 3 an einer Trennstelle 10 von der Leitung 2 abgetrennt, kann die Last, also die entsprechende Gewichtskraft und das durch das abgetrennte Leitungselement 3 entstehende Moment, über das Übersetzungsmittel 9, das Zugmittel 8, den Tragarm 7 und das Halteelement 4 in die Leitung 2 eingeleitet werden. Der Übersetzungsmittel 9, insbesondere ein Flaschenzug, umfasst bevorzugt einen oder mehrere Blöcke 13 mit jeweils einer oder mehreren Rollen, und eine oder mehrere Rollen 19 um ein entsprechendes Übersetzungsverhältnis nutzen zu können. Das Übersetzungsmittel 9 umfasst ferner einen Haken 20, an dem das abzutrennende Leitungsstück 3 befestigt werden kann. Der Haken 20 kann auch direkt am Zugmittel 8 ausgebildet sein, ohne dass ein Übersetzungsmittel 9 ausgebildet ist.

Das Zugmittel 8 ist mit einer Winde 11 verbunden, so dass durch Betätigen der Winde 11 das Zugmittel 8 ab- oder aufgewickelt werden kann. So kann das abzutrennende Leitungselement 3 nach Abtrennung zum weiteren Transport abgesetzt werden. Die Winde 11 umfasst einen Elektromotor, der entsprechend angetrieben werden kann.

Der Tragarm 7 ist aus einem spezifisch leichten Werkstoff aufgebaut, insbesondere aus Aluminium oder einer Aluminiumlegierung, um das Eigengewicht des Tragarms 7 und das daraus resultierende in das Halteelement 4 einzuleitende Moment zu reduzieren. Der Tragarm 7 ist als Fachwerk aufgebaut, um eine Gewichtsreduktion zu ermöglichen. Die Masse des abzutrennenden Leitungsstücks 3 ist dabei auf die mögliche über den Tragarm 7, das Halteelement 4 und die Spanngurte 6 in die Leitung 2 einzuleitende Last abgestimmt.

Fig. 3 zeigt einen Schnitt entlang der in Fig. 2 mit "III-III" markierten Linie. Die Flansche 12 des Halteelements 4 liegen auf der Leitung 2 auf. Fig. 4 zeigt einen Schnitt entlang der in Fig. 2 mit "IV-IV" markierten Linie. Die Plattform 5 weist vier Verbindungselemente 14 auf, über die der Tragarm 7 mit der Plattform 5 verbunden ist.

Fig. 5 und 6 zeigen die Verbindung der Plattform 5 über die Spanngurte 6 mit der Leitung 2. Die Spanngurte 6 bewirken dabei eine Druckkraft D auf die Leitung 2, die einen Kraftschluss der Spanngurte 6 und damit des Halteelements 4 über die Flansche 12 auf die Leitung 2 bewirken. Hierdurch werden die auf das Halteelement 4 wirkenden Kräfte und Momente M in die Leitung 2 eingeleitet.

Fig. 7 zeigt ein weiteres Beispiel einer Vorrichtung 1 zum Aufnehmen der Last eines von einer Leitung 2 abzutrennenden Leitungsstücks 3, ohne dass das Zugmittel 8 und gegebenenfalls ein Übersetzungsmittel 9 und/oder ein Haken 20 gezeigt ist.. Im Folgenden sollen nur die Unterschiede zum ersten Beispiel hervorgehoben werden, im Übrigen wird auf die oben gemachten Ausführungen verwiesen.

Im Unterschied zum ersten Beispiel weist die Vorrichtung 1 ein erstes Halteelement 15 und ein zweites Halteelement 16 auf. Erstes Halteelement 15 und zweites Halteelement 16 sind wie das Halteelement 4 aus dem ersten Beispiel ausgebildet und mit Spanngurten 6 an der Leitung 2 fixiert. Das abzutrennende Leitungsstück 3 liegt nicht an einem Ende der Leitung 2, vielmehr soll ein erstes Leitungsstück beim Rückbau der Leitung 2 herausgetrennt werden. Hierzu wird das abzutrennende Leitungsstück 3 über eine erste Trennstelle 17 und eine zweite Trennstelle 18 getrennt wird. Das Zugmittel 8, ggf. mit Übersetzungmittel 9 und/oder Haken 20 ist in dieser schematischen Zeichnung nicht eingezeichnet, es dient aber auch hier zum Ablassen des abgetrennten Leitungsstücks 3. Die Vorrichtung 1 umfasst ein Führungsmittel 21 zur Führung des Zugmittels 8.

Die Erfindung beruht auf einer Halterung eines Tragarms 7 auf einer rückzubauenden Leitung 2, um die Last durch ein abzutrennendes Leitungsstück 3 in die Leitung 2 selbst einzuleiten wie auch das entsprechend entstehende Moment. Dies ermöglicht den Rückbau von Leitungen 2 auch bei beengten Platzverhältnissen, auf Sondergerüste und ähnliches kann verzichtet werden, was insbesondere beim Rückbau von kerntechnischen Anlagen wie Kernkraftwerken vorteilhaft ist.

### Bezugszeichenliste

- 1: Vorrichtung zum Aufnehmen der Last eines von einer Leitung abzutrennenden Leitungsstücks
- 2: Leitung
- 3: Abzutrennendes Leitungsstück
- 4: Halteelement
- 5: Plattform
- 6: Spanngurt
- 7: Tragarm
- 8: Zugmittel
- 9: Übersetzungsmittel
- 10: Trennstelle
- 11: Winde
- 12: Flansch
- 13: Block
- 14: Verbindungselement
- 15: Erstes Halteelement
- 16: Zweites Halteelement
- 17: Erste Trennstelle
- 18: Zweite Trennstelle
- 19: Rolle
- 20: Haken
- 21: Führungsmittel

- D: Druckkraft
- M: Moment

## Patentansprüche

1. Verfahren zum Aufnehmen der Last eines von einer Leitung (2) abzutrennenden Leitungsstücks (3), unter Einsatz einer Vorrichtung (1) zum Aufnehmen der Last eines von einer Leitung (2) abzutrennenden Leitungsstücks (3), umfassend mindestens ein Halteelement (4, 15, 16) zum kraftübertragenden Befestigen an der Leitung (2); einen kraftübertragend an dem mindestens einen Halteelement (4) befestigten Tragarm (7), der ein Zugmittel (8) aufweist, welches zum Aufnehmen der Last des abzutrennenden Leitungsstücks (3) mit diesem verbindbar ist, bei dem mindestens ein Halteelement der Vorrichtung (1) kraftübertragend an der Leitung (2) befestigt wird und das Zugmittel (8) mit dem abzutrennenden Leitungsstück verbunden wird.

2. Verfahren nach Anspruch 1, bei dem das mindestens eine Halteelement (4, 15, 16) über zwei Flansche (12) verfügt, über die das Halteelement (4) auf die Leitung (2) aufgelegt wird.

3. Verfahren nach einem der vorhergehenden Ansprüche, bei dem der Tragarm (7) der Vorrichtung (1) aus Aluminium oder einer Aluminiumlegierung ausgebildet ist.

4. Verfahren nach einem der vorhergehenden Ansprüche, bei denen der Tragarm (7) der Vorrichtung (1) ein Fachwerk umfasst.

5. Verfahren nach einem der vorhergehenden Ansprüche, bei dem das mindestens eine Halteelement (4) über mindestens einen Spanngurt (6) kraftschlüssig mit der Leitung (2) verbunden wird.

6. Verfahren nach einem der vorhergehenden Ansprüche, bei dem das Zugmittel (8) über eine Winde (11) auf- und abgewickelt wird.

7. Verfahren zum Rückbau eines Kraftwerkes, insbesondere eines Kernkraftwerks, bei dem ein Verfahren nach einem der vorhergehenden Ansprüche beim Rückbau mindestens einer Leitung (2) eingesetzt wird.

## Claims

1. Method for supporting the load of a line section (3) to be severed from a line (2) by using a device (1) for supporting the load of a line section (3) to be severed from a line (2), comprising at least one holding element (4, 15, 16) to be fastened to the line (2) in a force-transmitting manner, a carrier arm (7) fastened to the at least one holding element (4) in a force-transmitting manner and having a pulling means (8), which can be connected to the line section (3) to be severed in order to support the load of the same, in which at least one holding element of the device (1) is fastened to the line (2) in a force-transmitting manner, and the pulling means (8) is connected to the line section to be severed.

2. Method according to Claim 1, in which the at least one holding element (4, 15, 16) has two flanges (12), via which the holding element (4) is placed on the line (2).

3. Method according to one of the preceding claims, in which the carrier arm (7) of the device (1) is formed from aluminium or an aluminium alloy.

4. Method according to one of the preceding claims, in which the carrier arm (7) of the device (1) comprises a framework.

5. Method according to one of the preceding claims, in which the at least one holding element (4) is connected to the line (2) in a force-fitting manner via at least one tension belt (6).

6. Method according to one of the preceding claims, in which the pulling means (8) is wound and unwound via a winch (11).

7. Method for dismantling a power plant, in particularly a nuclear power plant, in which a method according to one of the preceding claims is used when dismantling at least one line (2).

## Revendications

1. Procédé de réception de la charge d'un tronçon de conduite (3) à séparer d'une conduite (2), utilisant un dispositif (1) de réception de la charge d'un tronçon de conduite (3) à séparer d'une conduite (2), comprenant au moins un élément de retenue (4, 15, 16) pour être fixé avec transmission de force à la conduite (2) ; un bras porteur (7) fixé avec transmission de force à l'au moins un élément de retenue (4), qui présente un moyen de traction (8) qui peut être relié au tronçon de conduite (3) à séparer pour recevoir la charge de celui-ci, dans lequel au moins un élément de retenue du dispositif (1) est fixé avec transmission de force à la conduite (2) et le moyen de traction (8) est relié au tronçon de conduite à séparer.

2. Procédé selon la revendication 1, dans lequel l'au moins un élément de retenue (4, 15, 16) dispose de deux brides (12) par l'intermédiaire desquelles l'élément de retenue (4) est placé sur la conduite (2),

3. Procédé selon l'une quelconque des revendications précédentes, dans lequel le bras porteur (7) du dispositif (1) est réalisé en aluminium ou en un alliage d'aluminium.

4. Procédé selon l'une quelconque des revendications précédentes, dans lequel le bras porteur (7) du dispositif (1) comprend un treillis.

5. Procédé selon l'une quelconque des revendications précédentes, dans lequel l'au moins un élément de retenue (4) est relié par adhérence à la conduite (2) par l'intermédiaire d'au moins une sangle de serrage (6).

6. Procédé selon l'une quelconque des revendications précédentes, dans lequel le moyen de traction (8) est enroulé et déroulé par l'intermédiaire d'un treuil (11).

7. Procédé de déconstruction d'une centrale électrique, notamment d'une centrale nucléaire, dans lequel un procédé selon l'une quelconque des revendications précédentes est utilisé lors de la déconstruction d'au moins une conduite (2),
